# EUROPEAN PATENT APPLICATION

(11) **EP 0 681 903 A1**
(43) Date of publication of application: **15.11.1995**
(21) Application number: 95830144.2
(22) Date of filing: 11.04.1995
(51) Int. Cl.: B29C 49/78, G05D 23/19

(54) **Thermal conditioning system for a plant with several machines having individual conditioning and/or cooling requirements**

(30) Priority: 15.04.1994 IT FI940073
(71) Applicant: FRIGEL FIRENZE S.r.l., I-50019 Sesto Fiorentino (Firenze) (IT)
(72) Inventor: Moroni, Alessandra, I-50141 Firenze (IT)
(74) Representative: Mannucci, Gianfranco, Dott.-Ing.

(57) **Abstract**

For systems which require conditioning of limited precision and conditioning which is precise and constant, a plurality of individual precision cooling or thermoregulating units (U) are provided, for example for thermally conditioning moulds for thermoplastic resins; a central conditioning unit (10, 12A, 12B) having a heat exchanger (19) which removes heat to the outside, is designed directly to condition a hydraulic actuator or other piece of equipment in each or in a plurality of machines, and is designed to remove heat from each precision thermoregulating or cooling unit (U).

## Description

The invention relates to a thermal conditioning system for a plant with several machines, each of which has conditioning and cooling requirements. One example may be that of machines which require conditioning of limited precision, for the most part at a high temperature, and conditioning which is basically more precise and basically constant, such as is the case with thermoplastic-resin injection moulding presses, in which conditioning is required to cool the oil in hydraulic controls or other elements, and precision thermostatting is required for the individual moulds, which thermostatting can vary depending on the specific objects being produced by these moulds.

The invention enables the objects mentioned above to be achieved with the use of simple, efficient, flexible and economical installations. These and other objects and advantages will become clear in the following text.

Basically, the system according to the invention comprises: a plurality of individual precision cooling or thermoregulating units (such as those used for thermally conditioning injection moulds for thermoplastic resins); a central conditioning system having a heat exchanger which removes heat to the outside, which system is designed both directly to condition a hydraulic actuator or a hydraulic control unit or other piece of equipment in each of a plurality of machines, and also to remove heat from the said cooling or thermoregulating units.

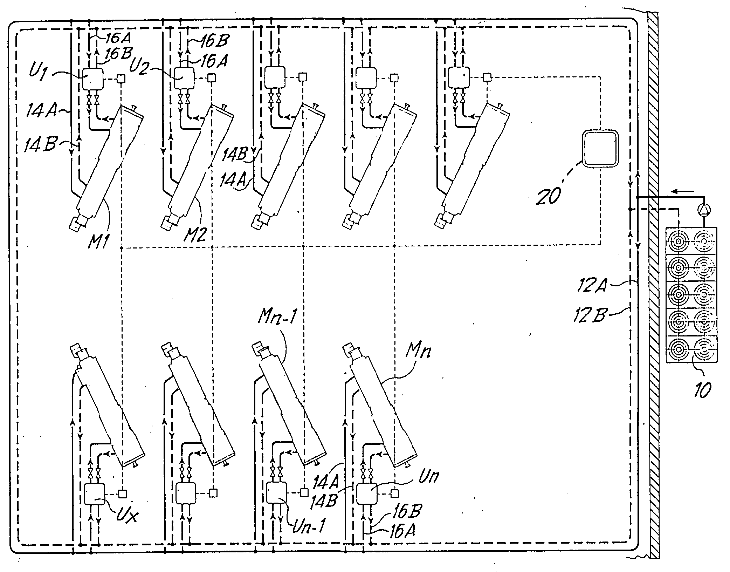

The invention will be more clearly understood by following the description and the appended drawing which shows a nonlimiting practical example of the said invention.

The drawing shows a simplified diagram illustrating implementation of the system according to the invention.

The drawing shows how several machines M1, M2 ... Mn-1, Mn are located in an environment or in a plurality of environments. Each of these machines can, for example, be a press for the injection moulding of plastic materials. Machines of this type require removal of heat from the hydraulic equipment which is provided in the machine and which generates heat which has to be removed, even without the specific need for precise thermostatting of the hydraulic controls. Rather, these machines require basically very stable thermostatting with very precise and well-timed corrections and therefore with stable temperatures, as far as, for example, the temperature of the moulds for injection of the plastic is concerned, which moulds need thermostatting at very precise and stably maintained temperatures, which may be the same or may differ for the various user units. This can be achieved using individual thermoregulating (or conditioning) units, such as for example that envisaged in another contemporaneously filed patent belonging to the same applicant, in which a conditioning unit is provided which has a heating and cooling system using a coolant fluid or the like, and is in turn fitted with a condenser from which a certain amount of heat needs to be removed in order to maintain a temperature equilibrium but which does not require the same precision as the thermoregulating (refrigerating or similar) unit to which this condenser is slaved.

According to the illustration in the diagram, an installation is provided which has individual conditioning units U1, U2 .... Un-1, Un associated with the individual machines and, for example, set to ensure precise thermostatting, with extremely rapid corrections, of the moulds when the machines M1 .... Mn are machines for moulding thermoplastic materials.

Each of the conditioning units U1 .... Un will be calibrated to the required temperature for its particular mould which may, therefore, be the same as or different from that of other units.

A cumulative conditioning and cooling system for the plant as a whole is also provided, and is connected to a heat removal means 10, for example of the dry type, and which can be set up according to the capacity required. Associated with the said heat removal means, which functions by heat exchange with the external air, is a hydraulic conditioning circuit which has a delivery line 12A and a return line 12B, and which can be a closed circuit with which the individual conditioning units connect. A branch 14A, 14B is provided between the two lines 12A and 12B for each of the machines M1 ... Mn, for example for thermostatting, even if to a relatively approximate degree, the hydraulic control unit of the associated machine or for other conditioning operations (such as cooling compressors, grinders or other equipment). A respective output and return branch 16A, 16B, which enables heat to be removed from the thermoregulating unit U1 .... Un, is also provided for each machine or rather for each of the thermoregulating units U1 .... Un.

The temperatures prevailing in the circuit 12A, 12B are to a limited degree slightly higher than the surrounding temperatures and therefore heat losses are actually advantageous to the process and to the consumption of energy by the heat removal system 10.

When the surrounding temperatures are relatively low, the circuit 12A, 12B can be connected, instead of or in addition to a heat exchanger such as the heat removal means 10, to a system for heating the environment, resulting in energy savings and in the possibility of completely switching off or reducing the use of the dry dissipator constituted by the heat removal means 10 or other equivalent element.

Thus, using the arrangement described, it is possible both to achieve substantial energy savings together with a reduction in heat losses when compared with conventional systems, and to satisfy the cooling requirements of individual pieces of equipment and units, safely and consistently, even when these temperature requirements differ between each individual user unit in the installations provided in the plant.

The reference numeral 20 can indicate a centralized control unit.

When compared with conventional systems, the use of separate units and a centralized heat removal system provides many advantages, including:
1) VERSATILITY AND FLEXIBILITY, the following being made possible: individualized control of the temperature, of the rate and of the pressure in each individual user unit which requires a precise temperature with a wide range of use (-5°C, +200°C); programmability through a serial connection with the manufacturing machine; optimization of the relationship between the process and the temperature of the conditioning water; possibility of removing the heat produced by all the user units, which are at individualized temperatures, via a single heat removal system and a single coolant fluid distribution circuit;
2) CONSISTENCY AND PRECISION, the following being made possible: precision and stability of the temperature with an error margin of ±1°C; "continuous" graduation of the refrigerating capacity supplied from 0 to 100%; consistency of flow rate to and pressure at the user units, which is unaffected by the other processes, to those user units which require it; perfect uniformity of production, fewer rejects, increased productivity;
3) EASY INSTALLATION AND CONTROL, the following being made possible: ease of handling, installation and commissioning without the need for expert assistance; "on-board machine" location close to the process and to the operator; virtually no maintenance necessary; additional systems engineering is simple and economical, without insulation of the water distribution pipes or air ducts; immediate replacement in the event of breakdown with less damage arising from production stoppages; ability to fill and empty the user circuit completely automatically, without losing any conditioning fluid, thus greatly reducing the time required to change moulds;
4) ENERGY SAVINGS from the following: low start-up currents because of the subdivision of the power; no loss to the environment from the cooled-water distribution pipes; optimization of the cooling system thanks to the differentiation of temperature for each individual user unit; greater efficiency in summer due to improved dissipation of the heat of condensation through the externally-installed heat removal means; ability to recover the heat of condensation generated by the refrigerators by producing hot water at temperatures of up to 50°C; improved efficiency under reduced loading due to the centralization of the removal of the heat of condensation;
5) ECOLOGY, inasmuch as the system suggested has in total from 50 to 70% less coolant compared with a conventional air-condensation system of equal power and, furthermore, this coolant is distributed through many small independent circuits, which means that if a leakage did occur, much less gas would be released into the environment.

The present system avoids the need to insulate the distribution pipes and air ducts.

It will be understood that the drawing shows only an illustrative embodiment, given purely by way of a practical demonstration, of the invention, it being possible for the invention to be modified as regards forms and arrangements without thereby departing from the scope of the concept underlying the said invention.

## Claims

1. Thermal conditioning system for a plant with several machines, each of which has at least two conditioning requirements - and in particular requires conditioning of limited precision and conditioning which is basically precise and basically constant - characterized in that it comprises: a plurality of individual precision thermoregulating units (U) (such as those used for thermally conditioning a mould for thermoplastic resins); and a central conditioning system (10, 12A, 12B) having a heat exchanger which removes heat to the outside, which system is designed both directly to condition a hydraulic actuator or other piece of equipment in each of a plurality of machines or any other user unit, and to disperse heat from each of the said thermoregulating or cooling units.

2. System according to Claim 1, characterized in that the central conditioning unit is combined with a dry heat removal means (10) which functions by transferring heat to the external atmosphere.

3. System according to Claims 1 and 2, characterized in that the central conditioning unit is used to heat environments by recovering the heat produced by the user units.

4. System according to Claim 1, characterized in that the individual precision conditioning system is of the type comprising a user circuit, a conditioning circuit with an accumulator tank and with a cooling unit and heating element, a loop for connecting the two circuits, and a three-way valve, in the user circuit and in the loop, in accordance with a contemporaneously filed patent belonging to the same applicant.

5. Thermal conditioning system for a plant with several machines and/or auxiliary units, with individual conditioning and thermoregulating or cooling requirements; all as described above and illustrated by way of example in the appended drawing.
